# FASCICULE DE BREVET EUROPEEN

(11) **EP 2 686 225 B1**
(45) Date de publication et mention de la délivrance du brevet: **08.04.2015**
(21) Numéro de dépôt: 12712297.6
(22) Date de dépôt: 29.02.2012
(51) Int. Cl.: B62D 65/02

(54) **SYSTEME DE PREHENSION MODULAIRE POUR PIECE DE CARROSSERIE DE VEHICULE**
MODULARES GREIFERSYSTEM FÜR FAHRZEUGKAROSSERIETEILE
MODULAR GRIPPER SYSTEM FOR VEHICLE BODY WORK PART

(30) Priorité: 14.03.2011 FR 1152035
(43) Date de publication de la demande: 22.01.2014
(73) Titulaire: Peugeot Citroën Automobiles SA, 78140 Vélizy Villacoublay (FR)
(72) Inventeur: LEFEUVRE, Jean Jacques, F-35700 Rennes (FR); LAUTRAM, Daniel, F-35580 Guignen (FR)
(74) Mandataire: Fosse, Danièle
(86) Numéro de dépôt international: PCT/FR2012/050418
(87) Numéro de publication internationale: WO 2012/123657

(56) Documents cités:
- DE-A1-102006 054 557
- FR-A1- 2 655 937
- FR-A1- 2 952 898
- JP-A- 2 279 477
- JP-A- 2003 062 690
- KR-A- 20080 013 282
- KR-A- 20100 099 548

## Description

La présente invention se rapporte à un système de préhension modulaire pour pièce de carrosserie de véhicule.

Elle se rapporte plus particulièrement à un système de préhension modulaire pour pièce de carrosserie de véhicule, du type comprenant :
- au moins une poutre de structure s'étendant selon une direction principale ;
- un moyen d'amarrage sur un robot de manipulation, ledit moyen d'amarrage étant monté fixement sur la ou les poutres ;
- plusieurs outils de préhension conçus pour la préhension de la pièce de carrosserie ; et
- plusieurs moyens de support des outils de préhension.

Dans le domaine automobile, il est d'usage d'employer des systèmes de préhension, parfois appelés préhenseurs, pour la manipulation des pièces de carrosserie par des robots de manipulation, en particulier sur les lignes de montage du véhicule ou sur les lignes de ferrage et d'emboutissage des pièces de carrosserie en tôle.

Ces systèmes de préhension sont généralement conçus et fabriqués pour une pièce de carrosserie spécifique, comme par exemple un flan latéral de caisse, un capot, une portière, etc. Ainsi, lors d'une évolution de la pièce de carrosserie en question, le système de préhension initial s'avère souvent inadapté pour cette nouvelle pièce de carrosserie, et dans ce cas il est nécessaire de reconcevoir complètement le système de préhension. En outre, ces systèmes de préhension offrent peu de latitudes en termes de réglage et empêchent ou limitent les remises en état en cas d'incident technique sur le système de préhension.

Il est également connu d'employer des systèmes de préhension comportant des poutres pourvues d'encoches à intervalle régulier afin de pouvoir positionner les moyens de support à outil dans l'une ou l'autre encoche. Cependant, ce type de système de préhension permet seulement un montage des moyens de support à outil avec incrémentation dans les encoches, limitant ainsi le réglage en position pour ces supports. De plus, ces systèmes de préhension s'avèrent particulièrement limités pour les réglages de la position des outils sur leurs supports, de sorte qu'il est souvent indispensable de recourir à des pièces complémentaires spécifiques pour monter les outils sur leurs supports.

Dans DE 10 2006 054557, on a proposé un dispositif d'assemblage de partie avant de véhicule conforme au préambule de la revendication 1, adaptable pour des parties avant différentes et pour des véhicules différents. Ce dispositif est constitué d'un cadre suspendu et d'un cadre monté sur caisse sur lesquels sont montés mobiles différents éléments de préhension pour s'adapter en position aux différents modèles de parties avant et de véhicules.

La présente invention a pour but de résoudre ces inconvénients en proposant un système de préhension qui permette d'assurer un réglage étendu de la position des outils de préhension, d'adapter rapidement et facilement le système en cas de modification de la pièce de carrosserie, et utilisant un nombre limité de pièces pour permettre une conception simple et peu coûteuse du système conforme à l'invention.

A cet effet, elle propose un système de préhension modulaire pour pièce de carrosserie de véhicule, du type comprenant :
- au moins une poutre de structure s'étendant selon une direction principale ;
- un moyen d'amarrage sur un robot de manipulation, ledit moyen d'amarrage étant monté fixement sur la ou les poutres ;
- plusieurs outils de préhension conçus pour la préhension de la pièce de carrosserie ; et
- plusieurs moyens de support des outils de préhension ;
ce système étant remarquable en ce qu'au moins un ou chaque moyen de support comporte :
- une embase montée réglable en coulissement sur la poutre et réglable en rotation autour de la poutre ;
- une coulisse montée réglable en coulissement par rapport à l'embase ; et
- un porte-outil monté réglable en rotation sur la coulisse et portant l'outil de préhension concerné.

Ainsi, ce système offre pour chaque outil quatre possibilités de réglage de sa position dans l'espace :
- réglage en coulissement de l'embase du moyen de support sur la poutre ;
- réglage en rotation de l'embase du moyen de support autour de la poutre ;
- réglage en coulissement de la coulisse par rapport à l'embase ; et
- réglage en rotation du porte-outil sur la coulisse du moyen de support.

Avec une telle architecture, le système peut être adapté facilement et rapidement en jouant sur l'une et/ou l'autre des quatre possibilités de réglage. En outre, il est aisé de rajouter ou retirer des supports de la poutre afin de répondre à de nouvelles exigences géométriques.

Enfin, il suffit d'un nombre limité de pièces pour concevoir le système conforme à l'invention : au moins une poutre, un moyen d'amarrage, et autant de couples moyen de support/outil de préhension que nécessaire en tenant compte des quatre possibilités de réglage. Il est ainsi envisageable de prévoir un stock de plusieurs poutres, moyens de support et outils de préhension, de dimensions et/ou de géométrie différentes, pour répondre à quasiment tous les problèmes posés par les pièces de carrosserie en termes de poids, de géométrie et de dimensions.

Selon une caractéristique, la ou chaque poutre est constituée d'un tube ou profilé de section circulaire, facilitant ainsi les réglages de l'embase du support sur la poutre.

Selon une autre caractéristique, l'embase du ou de chaque support comporte un étrier constitué d'une bride semi-annulaire et d'une contre-bride semi-annulaire montées serrées autour de la poutre concernée, ledit étrier étant réglable en coulissement sur ladite poutre et en rotation autour de ladite poutre avant serrage de la contre-bride sur la bride.

Dans une réalisation particulière, au moins un ou chaque moyen de support comporte un corps creux solidaire de l'embase et dans lequel est monté réglable en coulissement la coulisse.

Selon une possibilité de l'invention, le corps creux du moyen de support s'étend selon une direction sensiblement tangentielle à la poutre concernée, ladite direction tangentielle étant sensiblement perpendiculaire à la direction principale de la poutre, de sorte que la coulisse est montée réglable en coulissement selon cette direction tangentielle.

Selon une autre possibilité de l'invention, le corps creux du moyen de support s'étend selon une direction radiale sensiblement perpendiculaire à la direction principale de la poutre, de sorte que la coulisse est montée réglable en coulissement selon cette direction radiale.

Avantageusement, la coulisse d'au moins un ou de chaque moyen de support présente une rotule sur une extrémité libre opposée à l'embase, et le porte-outil présente une cavité hémisphérique montée réglable en rotation sur cette rotule, assurant ainsi une liaison rotule entre le porte-outil et la coulisse.

Dans un mode de réalisation particulier, le système comporte deux poutres de structure parallèles et solidaires l'une de l'autre, notamment au moyen d'une ou plusieurs entretoises ; cette architecture étant intéressante pour des pièces de carrosserie de poids élevé.

Conformément à une autre caractéristique de l'invention, au moins un ou chaque outil de préhension comporte des moyens de serrage de la pièce de carrosserie, notamment du type pince de serrage, et/ou au moins une ventouse.

L'invention se rapporte également à un système dans lequel le moyen d'amarrage est monté fixement sur une extrémité libre ou sur une partie centrale de la ou de chaque poutre.

D'autres caractéristiques et avantages de la présente invention apparaîtront à la lecture de la description détaillée ci-après, de plusieurs exemples de mise en oeuvre non limitatifs, faite en référence aux figures annexées dans lesquelles :
- la figure 1 est une vue schématique en perspective d'un premier système de préhension conforme à l'invention, en situation de préhension d'une pièce de carrosserie du type flan latéral de caisse ;
- la figure 2 est une vue schématique en perspective d'un deuxième système de préhension conforme à l'invention, adapté pour la préhension d'une pièce de carrosserie du type tablier porteur ;
- la figure 3 est une vue schématique en perspective d'un troisième système de préhension conforme à l'invention, en situation de préhension d'une pièce de carrosserie du type capot ;
- la figure 4 est une vue schématique partielle et en perspective d'un quatrième système de préhension conforme à l'invention ;
- la figure 5 est une vue schématique en perspective d'une poutre de structure sur laquelle est monté un moyen d'amarrage sur un robot de manipulation, pour un système de préhension à une poutre ;
- la figure 6 est une vue schématique en perspective d'un assemblage de deux poutres de structure sur lesquelles est monté un moyen d'amarrage sur un robot de manipulation, pour un système de préhension à deux poutres ;
- la figure 7a est une vue schématique en perspective d'un premier moyen de support d'outil de préhension, sans la contre-bride équipant son embase ;
- la figure 7b est une vue schématique en perspective du premier moyen de support de la figure 7a, avec la contre-bride mais sans la coulisse et le porte-outil ;
- la figure 7c est une vue en coupe médiane du premier moyen de support de la figure 7a, sans la contre-bride ;
- la figure 8a est une vue schématique en perspective d'un second moyen de support d'outil de préhension, sans la contre-bride équipant son embase ;
- la figure 8b est une vue schématique en perspective du second moyen de support de la figure 8a, avec la contre-bride mais sans la coulisse et le porte-outil ;
- la figure 8c est une vue en coupe médiane du second moyen de support de la figure 8a, sans la contre-bride ;
- la figure 9 est une vue schématique en perspective d'un premier outil de préhension ;
- la figure 10 est une vue schématique en perspective d'un second outil de préhension.

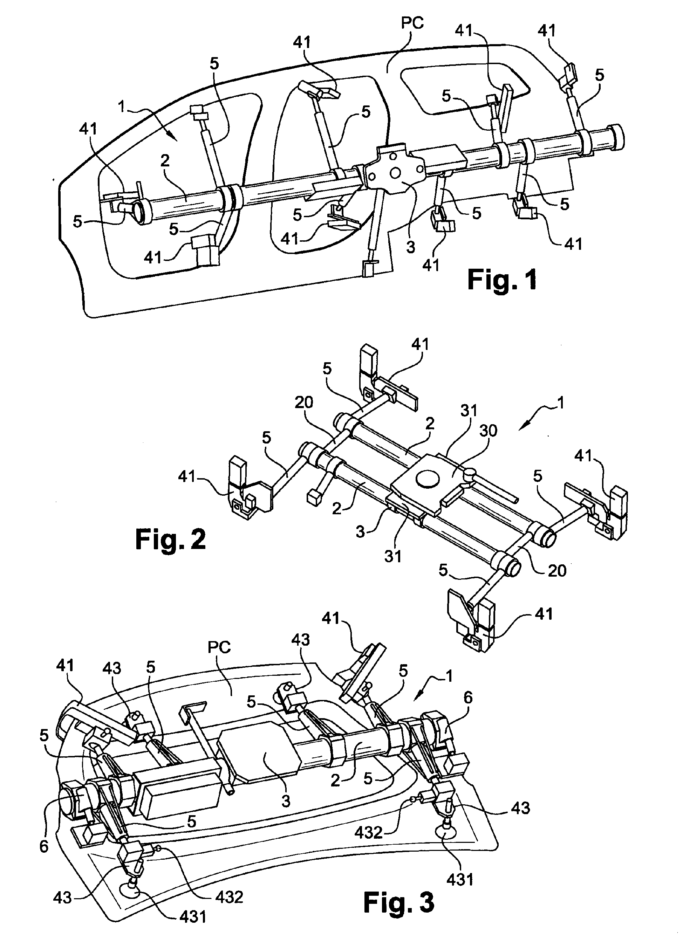

En référence aux figures 1 à 4, un système de préhension 1 modulaire conforme à l'invention, pour la préhension de pièces de carrosserie PC de véhicule automobile, comporte une poutre 2 de structure (figures 1, 3 et 4) ou deux poutres 2 de structure parallèles (figure 2).

Dans les deux cas, la ou chaque poutre 2 est constituée d'un tube en acier de section circulaire, s'étendant selon une direction principale, et dont la longueur dépend des dimensions et du poids de la pièce de carrosserie PC à porter.

Il est envisageable de prévoir trois longueurs de poutre pour répondre aux différentes pièces de carrosserie PC, avec :
- une grande longueur, de l'ordre de 3 mètres, pour les grandes pièces de carrosserie, telles que les flans latéraux de caisse (figure 1),
- une longueur moyenne, de l'ordre de 2 mètres, pour les moyennes pièces de carrosserie, telles que les tabliers porteurs (figure 2), et
- une petite longueur, de l'ordre de 1 mètre, pour les petites pièces de carrosserie, telles que les capots (figure 3) ou les portières latérales.

Le système de préhension 1 comporte également un moyen d'amarrage 3 sur un robot de manipulation (non illustré), où le moyen d'amarrage 3 est monté fixement sur la poutre 2 (figures 1, 3 et 4) ou sur les deux poutres 2 (figure 2). Ce moyen d'amarrage 3 comporte une platine 30 et des dispositifs de fixation 31 de la platine 30 sur la ou les poutres 2.

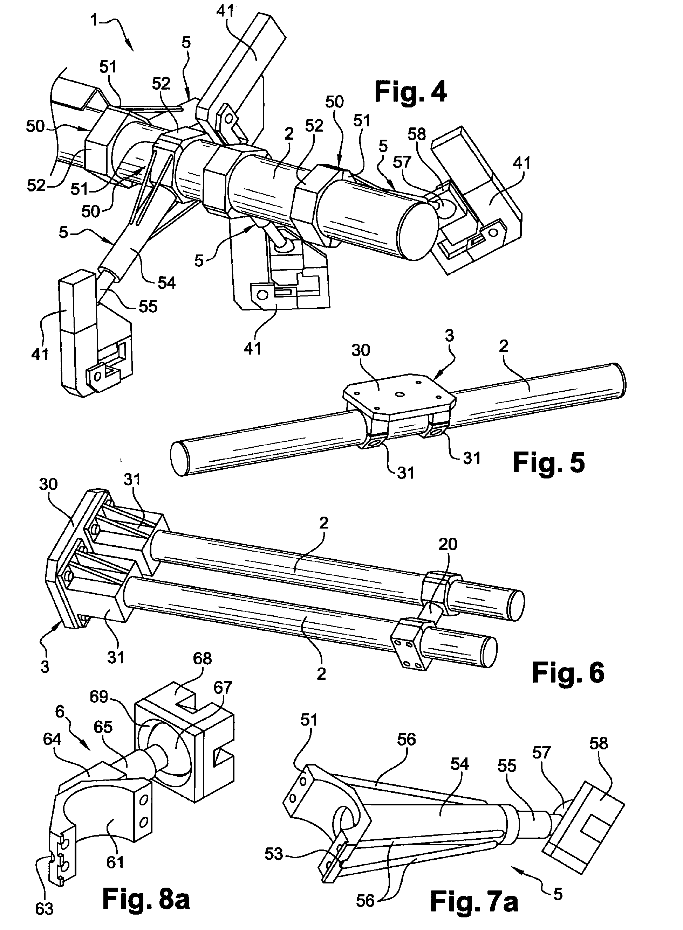

En référence à la figure 5, avec une seule poutre 2, les dispositifs de fixation sont composés de deux étriers 31 serrés autour de la poutre 2 en partie centrale de la poutre 2, c'est-à-dire en son milieu pour des raisons d'équilibre. Ainsi, le moyen d'amarrage 3 est fixé sur la partie centrale de la poutre 2, comme dans les modes de réalisation des figures 1 et 3.

En référence à la figure 2, avec deux poutres 2, les dispositifs de fixation sont composés de deux étriers 31 serrés autour de chaque poutre 2 en partie centrale des poutres 2, c'est-à-dire en leurs milieux pour des raisons d'équilibre. Ainsi, le moyen d'amarrage 3 est fixé sur la partie centrale des deux poutres 2. En outre, les poutres 2 sont solidarisées entre elles, et maintenues écartées, au moyen d'entretoises 20 disposées de part et d'autre du moyen d'amarrage 3.

En référence à la figure 6, avec deux poutres 2, les dispositifs de fixation sont composés de deux étriers 32 serrés autour de la poutre 2 sur les extrémités libres gauches (respectivement droites) des poutres 2. Ainsi, le moyen d'amarrage 3 est fixé sur les extrémités libres gauches (respectivement droites) des deux poutres 2. En outre, les poutres 2 sont solidarisées entre elles, et maintenues écartées, au moyen d'entretoises 20 disposées sur les extrémités libres opposées droites (respectivement gauches).

Le système de préhension 1 comporte aussi plusieurs outils de préhension 41, 42, 43 conçus pour la préhension de la pièce de carrosserie PC.

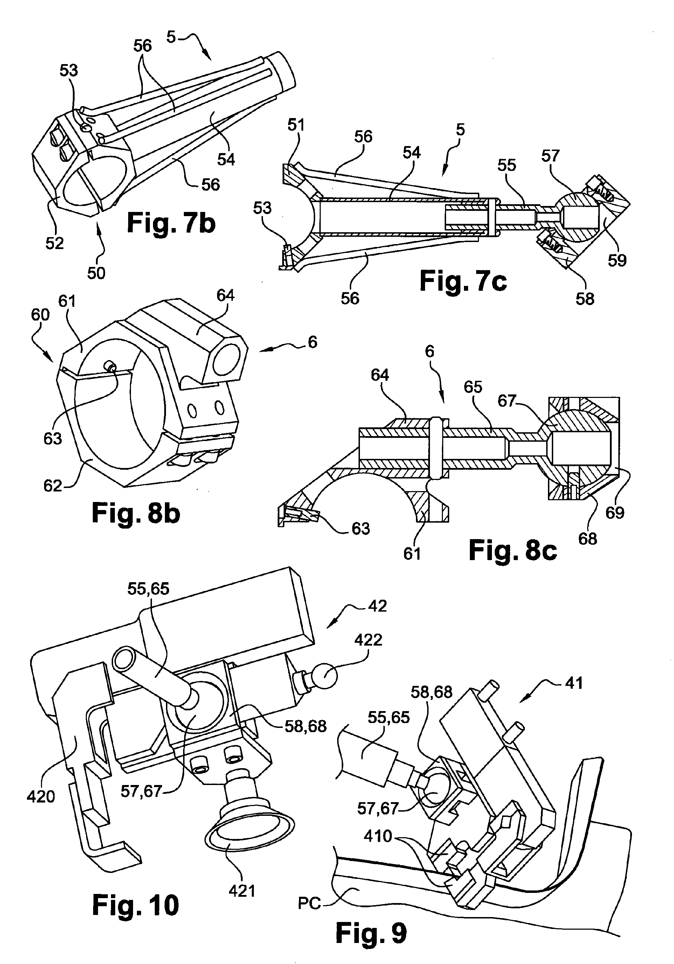

La figure 9 illustre un premier outil de préhension 41 qui comporte des moyens de serrage 410 de la pièce de carrosserie PC du type pince de serrage, intégrant deux mors ou mâchoires de serrage et des moyens mécaniques de réglage du serrage de la pince 410. Dans les modes de réalisation des figures 1, 2 et 4, le système de préhension 1 comporte uniquement des premiers outils de préhension 41.

La figure 10 illustre un second outil de préhension 42 qui comporte des moyens de serrage 420 de la pièce de carrosserie, ainsi qu'une ventouse 421 de maintien sur la pièce de carrosserie et une pinnule de contrôle 422.

La figure 3 montre un troisième outil de préhension 43 qui comporte une ventouse 431 de maintien sur la pièce de carrosserie PC et une pinnule de contrôle 432, sans moyen de serrage. Dans le mode de réalisation de la figure 3, le système de préhension 1 comporte à la fois des premiers outils de préhension 41 et des troisièmes outils de préhension 43.

Bien entendu, d'autres types d'outil de préhension peuvent être envisagés pour le système de préhension 1 conforme à l'invention, comme par exemple des outils munis de moyens de suspension de la pièce de carrosserie, comme par exemple un crochet ou similaire, ou des outils munis de moyens d'aimantation.

Le système de préhension 1 comporte en outre plusieurs moyens de support 5, 6 des outils de préhension 41, 42, 43, en l'occurrence un moyen de support 5 par outil de préhension.

Les figures 7a à 7c illustrent un premier moyen de support 5 qui comporte une embase 50 montée réglable en coulissement sur la poutre 2 et réglable en rotation autour de la poutre 2. Plus précisément, l'embase est constituée d'un étrier 50 comprenant une bride 51 semi-annulaire et une contre-bride 52 semi-annulaire.

Une fois monté sur la poutre 2, l'étrier 50 (ou embase) est serré sur la poutre 2, avec la bride 51 et la contre-bride 52 serrées l'une sur l'autre autour de la poutre 2, notamment au moyen d'organes de vissage. Avant le serrage de la contre-bride 52 sur la bride 51, il est possible de faire tourner l'étrier 50 autour de la poutre 2 et également de faire coulisser l'étrier 50 le long de la poutre 2.

L'étrier 50 comporte également une goupille 53 traversant la bride 51 et permettant le repérage de la position finale de l'étrier 50 sur la poutre 2, par marquage de la poutre 2.

Il est envisageable de prévoir plusieurs dimensions pour l'étrier 50, afin de répondre à plusieurs diamètres de poutre 2.

Le premier moyen de support 5 comporte également un corps creux 54 tubulaire faisant saillie de la bride 51 de l'étrier 50, et dans lequel est monté réglable en coulissement une coulisse 55 ; le corps creux 54 et la coulisse 55 formant ainsi un bras télescopique. Des vis et une goupille assurent le maintien en position de la coulisse 55 dans le corps creux 54 une fois le réglage en translation souhaité obtenu. Ainsi, la coulisse 55 est montée réglable en coulissement par rapport à l'embase/étrier 50.

Une fois l'étrier 50 en position sur la poutre 2, le corps creux 54 s'étend selon une direction radiale sensiblement perpendiculaire à la direction principale de la poutre 2 de section cylindrique, de sorte que la coulisse 55 est montée réglable en coulissement selon cette direction radiale qui intersecte la direction principale de la poutre 2.

Il est envisageable de prévoir plusieurs dimensions (tailles) et/ou plusieurs longueurs pour le corps creux 54 et pour la coulisse 55, afin de répondre à différentes dimensions et/ou poids pour les pièces de carrosserie. Le premier moyen de support 5 peut également comporter des haubans ou tiges 56 qui s'étendent entre le corps creux 54 et la bride 51 pour renforcer le maintien du corps creux 54 sur la bride 51.

Comme visible sur les figures 7a et 7c, la coulisse 55 présente une rotule 57 sur son extrémité libre opposée à l'étrier 50 ou à la bride 51.

Le premier moyen de support 5 comporte aussi un porte-outil 58 monté réglable en rotation sur l'extrémité libre de la coulisse 55. Plus précisément, le porte-outil 58 présente une cavité hémisphérique 59 montée réglable en rotation sur la rotule 57, assurant ainsi une liaison rotule réglable entre le porte-outil 58 et la coulisse 55 ; le réglage étant assuré par des vis de réglage.

Le porte-outil 58 se présente essentiellement sous la forme d'un boîtier ou d'une platine d'épaisseur suffisante pour prévoir la cavité hémisphérique 59, avec une surface externe opposée à la cavité hémisphérique et prévue pour la fixation (notamment par vissage) de l'outil de préhension 41, 42, comme visible sur les figures 9 et 10.

Les figures 8a à 8c illustrent un second moyen de support 6 qui comporte une embase 60 montée réglable en coulissement sur la poutre 2 et réglable en rotation autour de la poutre 2. Plus précisément, l'embase est constituée d'un étrier 60 comprenant une bride 61 semi-annulaire et une contre-bride 62 semi-annulaire.

Une fois monté sur la poutre 2, l'étrier 60 (ou embase) est serré sur la poutre 2, avec la bride 61 et la contre-bride 62 serrées l'une sur l'autre autour de la poutre 2, notamment au moyen d'organes de vissage. Avant le serrage de la contre-bride 62 sur la bride 61, il est possible de faire tourner l'étrier 60 autour de la poutre 2 et également de faire coulisser l'étrier 60 le long de la poutre 2.

L'étrier 60 comporte également une goupille 63 traversant la bride 61 et permettant le repérage de la position finale de l'étrier 60 sur la poutre 2, par marquage de la poutre 2.

Il est envisageable de prévoir plusieurs dimensions pour l'étrier 60, afin de répondre à plusieurs diamètres de poutre 2.

Le second moyen de support 6 comporte également un corps creux 64 tubulaire faisant saillie de la bride 61 de l'étrier 60, et dans lequel est monté réglable en coulissement une coulisse 65 ; le corps creux 64 et la coulisse 65 formant ainsi un bras télescopique. Des vis et une goupille assurent le maintien en position de la coulisse 65 dans le corps creux 64 une fois le réglage en translation souhaité obtenu. Ainsi, la coulisse 65 est montée réglable en coulissement par rapport à l'embase/étrier 60.

Une fois l'étrier 60 en position sur la poutre 2, le corps creux 64 s'étend selon une direction sensiblement tangentielle à la poutre 2, de sorte que la coulisse 65 est montée réglable en coulissement selon cette direction tangentielle ; cette direction tangentielle étant par ailleurs perpendiculaire à la direction principale de la poutre 2 et à la direction radiale mentionnée ci-dessus.

Il est envisageable de prévoir plusieurs dimensions (tailles) et/ou plusieurs longueurs pour le corps creux 64 et pour la coulisse 65, afin de répondre à différentes dimensions et/ou poids pour les pièces de carrosserie.

Comme visible sur les figures 8a et 8c, la coulisse 65 présente une rotule 67 sur son extrémité libre opposée à l'étrier 60 ou à la bride 61.

Le second moyen de support 6 comporte aussi un porte-outil 68 monté réglable en rotation sur l'extrémité libre de la coulisse 65. Plus précisément, le porte-outil 68 présente une cavité hémisphérique 69 montée réglable en rotation sur la rotule 67, assurant ainsi une liaison rotule réglable entre le porte-outil 68 et la coulisse 65 ; le réglage étant assuré par des vis de réglage.

Le porte-outil 68 se présente essentiellement sous la forme d'un boîtier ou d'une platine d'épaisseur suffisante pour prévoir la cavité hémisphérique 69, avec une surface externe opposée à la cavité hémisphérique et prévue pour la fixation (notamment par vissage) de l'outil de préhension 41, 42, comme visible sur les figures 9 et 10.

Dans les modes de réalisation des figures 1, 2 et 3, le système de préhension 1 comporte uniquement des premiers moyens de support 5, tandis que le mode de réalisation de la figure 3, le système de préhension 1 comporte des premiers moyens de support 5 et des seconds moyens de support 6.

Ainsi, avec les différents réglages en position, le système de préhension 1 permet d'assurer toutes les positions dans l'espace pour les différents outils de préhension 41, 42, 43, avec un montage simple. Autrement dit, la combinaison des quatre réglages (coulissement de l'étrier 50, 60 ; rotation de l'étrier 50, 60 ; coulissement de la coulisse 55, 65 ; liaison pivot entre la coulisse 55, 65 et le porte-outil 58, 68) permet de positionner et d'orienter les outils de préhension 41, 42, 43. En outre, le porte-outil 58, 68 est identique pour les deux moyens de support 5, 6 et peut supporter plusieurs types d'outil de préhension, ce qui réduit avantageusement le nombre de composants et simplifie la conception.

Bien entendu l'exemple de mise en oeuvre évoqué ci-dessus ne présente aucun caractère limitatif et d'autres améliorations et détails peuvent être apportés au système de préhension selon l'invention, sans pour autant sortir du cadre de l'invention tel que défini par les revendications.

## Revendications

1. Système de préhension (1) modulaire pour pièce de carrosserie (PC) de véhicule, du type comprenant :
- au moins une poutre (2) de structure s'étendant selon une direction principale ;
- un moyen d'amarrage (3) sur un robot de manipulation, ledit moyen d'amarrage (3) étant monté fixement sur la ou les poutres (2) ;
- plusieurs outils de préhension (41; 42; 43) conçus pour la préhension de la pièce de carrosserie (PC) ; et
- plusieurs moyens de support (5; 6) des outils de préhension (41; 42; 43) ; le système de préhension étant tel qu'au moins un ou chaque moyen de support (5; 6) comporte :
- une embase (50; 60) montée réglable en coulissement sur la poutre (2);
- un porte-outil (58; 68) monté réglable en rotation sur la coulisse (55; 65) et portant l'outil de préhension (41; 42; 43) concerné, et **caractérisé en ce que** l'embase (50; 60) est aussi montée réglable en rotation autour de la poutre (2) ; et **en ce qu'**au moins l'un ou chaque moyen de support (5; 6) comporte en outre :
- une coulisse (55; 65) montée réglable en coulissement par rapport à l'embase (50; 60).

2. Système de préhension (1) selon la revendication 1, dans lequel la ou chaque poutre (2) est constituée d'un tube ou profilé de section circulaire.

3. Système de préhension (1) selon les revendications 1 ou 2, dans lequel l'embase (50; 60) d'au moins un ou de chaque moyen de support (5; 6) comporte un étrier constitué d'une bride (51) semi-annulaire et d'une contre-bride (52) semi-annulaire montées serrées autour de la poutre (2) concernée, ledit étrier étant réglable en coulissement sur ladite poutre (2) et en rotation autour de ladite poutre (2) avant serrage de la contre-bride (52) sur la bride (51).

4. Système de préhension (1) selon l'une quelconque des revendications 1 à 3, dans lequel au moins un ou chaque moyen de support (5; 6) comporte un corps creux (54; 64) solidaire de l'embase (50; 60) et dans lequel est monté réglable en coulissement la coulisse (55; 65).

5. Système de préhension (1) selon la revendication 4, dans lequel le corps creux (54; 64) du moyen de support (5; 6) s'étend selon une direction sensiblement tangentielle à la poutre (2) concernée, ladite direction tangentielle étant sensiblement perpendiculaire à la direction principale de la poutre (2), de sorte que la coulisse (55; 65) est montée réglable en coulissement selon cette direction tangentielle.

6. Système de préhension (1) selon la revendication 4, dans lequel le corps creux (54; 64) du moyen de support (5; 6) s'étend selon une direction radiale sensiblement perpendiculaire à la direction principale de la poutre (2), de sorte que la coulisse (55; 65) est montée réglable en coulissement selon cette direction radiale.

7. Système de préhension (1) selon l'une quelconque des revendications 1 à 6, dans lequel la coulisse (55; 65) d'au moins un ou de chaque moyen de support (5; 6) présente une rotule (57 ; 67) sur une extrémité libre opposée à l'embase (50; 60), et le porte-outil (58; 68) présente une cavité hémisphérique (59 ; 69) montée réglable en rotation sur cette rotule (57 ; 67).

8. Système de préhension (1) selon l'une quelconque des revendications 1 à 7, comportant deux poutres (2) de structure parallèles et solidaires l'une de l'autre, notamment au moyen d'une ou plusieurs entretoises (20).

9. Système de préhension (1) selon l'une quelconque des revendications 1 à 8, dans lequel au moins un ou chaque outil de préhension (41; 42 ; 43) comporte des moyens de serrage (410 ; 420) de la pièce de carrosserie (PC), notamment du type pince de serrage, et/ou au moins une ventouse (421 ; 431).

10. Système de préhension (1) selon l'une quelconque des revendications 1 à 9, dans lequel le moyen d'amarrage (3) est monté fixement sur une extrémité libre ou sur une partie centrale de la ou de chaque poutre (2).

## Patentansprüche

1. Modulares Greifsystem (1) für ein Fahrzeug-Karosserieteil (PC), in der Art, dass es folgendes umfasst:
- zumindest einen Strukturbalken (2), der sich in eine Hauptrichtung erstreckt;
- eine Verankerungsvorrichtung (3) auf einem Hilfsroboter, wobei die besagte Verankerungsvorrichtung (3) fest auf dem oder den Balken (2) montiert ist;
- mehrere Greifwerkzeuge (41; 42; 43), die für das Greifen des Karosserieteils (PC) gestaltet wurden; und
- mehrere Haltevorrichtungen (5; 6) für die Greifwerkzeuge (41; 42; 43);
wobei das Greifsystem derart gestaltet ist, dass zumindest eine oder jede Haltevorrichtung (5; 6) folgendes umfasst:
- ein Unterteil (50; 60), das gleitend einstellbar auf dem Balken (2) montiert ist;
- einen Werkzeugträger (58; 68), der drehend einstellbar auf der Kulisse (55; 65) montiert ist, und das betroffene Greifwerkzeug (41; 42; 43) tragend, und **dadurch gekennzeichnet, dass** das Unterteil (50; 60) auch drehend einstellbar um den Balken (2) montiert ist; und dadurch, dass zumindest eine oder jede Haltevorrichtung (5; 6) darüber hinaus folgendes umfasst:
- eine Kulisse (55; 65), die im Verhältnis zum Unterteil (50; 60) gleitend einstellbar montiert ist.

2. Greifsystem (1) nach Anspruch 1, bei dem der oder jeder Balken (2) aus einem Rohr oder Profil mit kreisförmigem Querschnitt gebildet wird.

3. Greifsystem (1) nach den Ansprüchen 1 oder 2, bei dem das Unterteil (50; 60) zumindest einer oder jeder Haltevorrichtung (5; 6) einen Bügel umfasst, der aus einem halbkreisförmigen Flansch (51) und einem halbkreisförmigen Gegenflansch (52) gebildet wird, die straff um den betroffenen Balken (2) montiert sind, wobei der besagte Bügel auf dem besagten Balken (2) gleitend, und um den besagten Balken (2) drehend einstellbar ist, bevor der Gegenflansch (52) auf dem Flansch (51) festgezogen wird.

4. Greifsystem (1) nach irgendeinem der Ansprüche 1 bis 3, bei dem zumindest eine oder jede Haltevorrichtung (5; 6) einen Hohlkörper (54; 64) umfasst, der fest mit dem Unterteil (50; 60) verbunden ist und in dem die Kulisse (55; 65) gleitend einstellbar montiert ist.

5. Greifsystem (1) nach Anspruch 4, bei dem sich der Hohlkörper (54; 64) der Haltevorrichtung (5; 6) in eine in etwa tangentiale Richtung zum betroffenen Balken (2) erstreckt, wobei die besagte tangentiale Richtung ein etwa senkrecht zur Hauptrichtung des Balkens (2) verläuft, sodass die Kulisse (55; 65) in diese tangentiale Richtung gleitend einstellbar montiert wird.

6. Greifsystem (1) nach Anspruch 4, 5ei dem sich der Hohlkörper (54; 64) der Haltevorrichtung (5; 6) in eine radiale Richtung in etwa senkrecht zur Hauptrichtung des Balkens (2) erstreckt, sodass die Kulisse (55; 65) in diese radiale Richtung gleitend einstellbar montiert wird.

7. Greifsystem (1) nach irgendeinem der Ansprüche 1 bis 6, bei dem die Kulisse (55; 65) zumindest einer oder jeder Haltevorrichtung (5; 6) ein Kugelgelenk (57; 67) auf einem freien Ende gegenüber dem Unterteil (50; 60) aufweist, und der Werkzeughalter (58; 68) eine halbkugelförmige Vertiefung (59; 69) aufweist, die drehend einstellbar auf diesem Kugelgelenk (57; 67) montiert ist.

8. Greifsystem (1) nach irgendeinem der Ansprüche 1 bis 7, zwei parallel verlaufende Strukturbalken (2) umfassend, die vor allem anhand einer Vorrichtung mit einem oder mehreren Abstandhaltern (20) fest miteinander verbunden sind.

9. Greifsystem (1) nach irgendeinem der Ansprüche 1 bis 8, bei dem zumindest ein oder jedes Greifwerkzeug (41; 42; 43) Klemmvorrichtungen (410; 420) für das Karosserieteil (PC) umfasst, vor allem in der Art einer Klemmzange, und/oder zumindest einen Saugnapf (421; 431).

10. Greifsystem (1) nach irgendeinem der Ansprüche 1 bis 9, bei dem die Verankerungsvorrichtung (3) fest an einem freien Ende oder in einem mittleren Abschnitt des oder eines jeden Balkens (2) montiert ist.

## Claims

1. Modular gripper system (1) for a vehicle bodywork part (PC), of the type comprising:
- at least one structural beam (2) extending along a main direction;
- an anchor means (3) for anchoring to a handling robot, said anchor means (3) being mounted fixedly on the beam or beams (2);
- a plurality of gripping tools (41; 42; 43) designed to grip the bodywork part (PC); and
- a plurality of support means (5; 6) for supporting the gripping tools (41; 42; 43);
the gripper system being such that at least one or each support means (5; 6) comprises:
- a base (50; 60) mounted such that it can be adjusted by sliding on the beam (2);
- a tool holder (58; 68) mounted such that it can be adjusted by rotation on the slide (55; 65) and which holds the relevant gripping tool (41; 42; 43), and **characterised in that** the base (50; 60) is also mounted such that it can be adjusted by rotation about the beam (2); and **in that** at least one or each support means (5; 6) further comprises:
- a slide (55; 65) mounted such that it can be adjusted by sliding in relation to the base (50; 60).

2. Gripper system (1) according to claim 1, wherein the or each beam (2) is comprised from a pipe or profile with a circular cross-section.

3. Gripper system (1) according to claims 1 or 2, wherein the base (50; 60) of at least one or each support means (5; 6) comprises a clamp formed from a semi-circular flange (51) and a semi-circular companion flange (52) mounted tightly around the relevant beam (2), said clamp capable of being adjusted by sliding on said beam (2) and by rotation about said beam (2) before tightening of the companion flange (52) onto the flange (51).

4. Gripper system (1) according to any one of claims 1 to 3, wherein at least one or each support means (5; 6) comprises a hollow body (54; 64) secured to the base (50; 60) and in which the slide (55; 65) is mounted such that it can be adjusted by sliding.

5. Gripper system (1) according to claim 4, wherein the hollow body (54; 64) of the support means (5; 6) extends along a direction substantially tangential to the relevant beam (2), said tangential direction being substantially perpendicular to the main direction of the beam (2), so that the slide (55; 65) is mounted such that it can be adjusted by sliding along this tangential direction.

6. Gripper system (1) according to claim 4, wherein the hollow body (54; 64) of the support means (5; 6) extends along a radial direction substantially perpendicular to the main direction of the beam (2), so that the slide (55; 65) is mounted such that it can be adjusted by sliding along this radial direction.

7. Gripper system (1) according to any one of claims 1 to 6, wherein the slide (55; 65) of at least one or each support means (5; 6) has a ball joint (57; 67) on a free end opposite the base (50; 60), and the tool holder (58: 68) has a hemispherical cavity (59; 69) mounted such that it can be adjusted by rotation on this ball joint (57; 67).

8. Gripper system (1) according to any one of claims 1 to 7, comprising two parallel structural beams (2) secured to each other, in particular by means of one or a plurality of spacers (20).

9. Gripper system (1) according to any one of claims 1 to 8, wherein at least one or each gripping tool (41; 42; 43) comprises tightening means (410; 420) for tightening the bodywork part (PC), in particular such as tightening pliers, and/or at least one suction cup (421; 431).

10. Gripper system (1) according to any one of claims 1 to 9, wherein the anchor means (3) is mounted fixedly on a free end or on a central part of the or each beam (2).
